# EUROPEAN PATENT APPLICATION

(11) **EP 1 091 578 A2**
(43) Date of publication of application: **11.04.2001**
(21) Application number: 00120925.3
(22) Date of filing: 26.09.2000
(51) Int. Cl.: H04N 7/00, G06F 11/14

(54) **Information processing apparatus and method and recording medium**

(30) Priority: 27.09.1999 JP 27167799
(71) Applicant: SONY CORPORATION, Tokyo (JP)
(72) Inventor: Ishikawa, Masayuki, Sony Corporation, Shinagawa-ku, Tokyo (JP)
(74) Representative: Melzer, Wolfgang, Dipl.-Ing.

(57) **Abstract**

The present invention relates to an information processing apparatus for transmitting/receiving a desired information signal through a network, comprising: control means for controlling another information processing apparatus through the network; and storage means for storing information associated with control of another information processing apparatus by the control means.

## Description

### BACKGROUND OF THE INVENTION

The present invention relates generally to an information processing apparatus, an information processing method, and a recording medium. More particularly, to an information processing apparatus, an information processing method, and a recording medium that store information about control of other apparatuses, thereby facilitating the recovery processing to be executed after the interruption of processing.

In a home network system such as the IEEE 1394 serial bus, two or more information processing apparatuses (for example, VCR (Video Cassette Recorder) and IRD (Integrated Receiver Decoder) can be connected to the bus for reproducing and recording information (image and sound) and transmitting/receiving information between the connected information processing apparatuses for edit processing such as dubbing. Conventionally, an information processing apparatus on the controlling side issues an AV/C (Audio Video/Control) command to an information processing apparatus on the controlled side to control the latter.

If, during edit processing by use of plural VCRS, any of them is inadvertently disconnected from a network to which it is connected or if power outage occurs, thereby interrupting the edit processing, the conventional control based on AV/C command must trouble the user to manually set an edit processing restart sequence.

### SUMMARY OF THE INVENTION

It is therefore an object of the present invention to provide an information processing apparatus, an information processing method, and a recording medium that store information about the control of other apparatuses connected to a network, thereby facilitating, on the basis of the stored control information, the recovery processing to be executed after the interruption of processing.

In carrying out the invention and according to one aspect thereof, there is provided an information processing apparatus for transmitting/receiving a desired information signal through a network, comprising: control means for controlling another information processing apparatus through the network; and storage means for storing information associated with control of another information processing apparatus by the control means.

The above-mentioned information processing apparatus further comprising abnormal condition detecting means for detecting an abnormal condition caused during the execution of predetermined processing by another information processing apparatus under the control by the control means.

The above-mentioned information processing apparatus further comprising recovery detecting means for detecting the elimination of the abnormal condition detected by the abnormal condition detecting means.

The above-mentioned information processing apparatus further comprising state resetting means for setting a state as it was before the occurrence of the abnormal condition on the basis of the information associated with control of another information processing apparatus stored in the storage means.

The above-mentioned control means restarts control of another information processing apparatus if the control state before the occurrence of the abnormal state is set by the state resetting means.

The above-mentioned information processing apparatus further comprising output means for outputting contents of the abnormal condition detected by the abnormal condition detecting means.

The above-mentioned abnormal condition detecting means determines presence of the abnormal condition by detecting a value of remaining time.

The above-mentioned control means comprising time setting means for setting a time from which the control is started.

The above-mentioned control means further comprising an apparatus control module and a functional component module.

The above-mentioned storage means stores a value of remaining time into a nonvolatile storage area.

In carrying out the invention and according to another aspect thereof, there is provided an information processing method for processing an information processing apparatus for transmitting/receiving a desired information signal through a network, the method comprising the steps of: controlling another information processing apparatus through the network; and storing information associated with control of another information processing apparatus in the control step.

In carrying out the invention and according to further another aspect thereof, there is provided a recording medium recording a computer-readable program for use in an information processing apparatus for transmitting/receiving a desired information signal through a network, the computer-readable program comprising the steps of: controlling another information processing apparatus through the network; and storing information associated with control of another information processing apparatus in the control step.

### BRIEF DESCRIPTION OF THE DRAWINGS

These and other objects of the invention will be seen by reference to the description, taken in connection with the accompanying drawing, in which:
FIG. 1 is a block diagram illustrating a configuration of a network system;
FIG. 2 is a block diagram illustrating a detailed configuration of an IRD shown in FIG. 1;
FIG. 3 is a block diagram illustrating a detailed configuration of a VCR shown in FIG. 1;
FIG. 4 is a diagram illustrating a software stack stored in a hard disc drive shown in FIG. 2;
FIG. 5 is a diagram illustrating the installation of a DCM and an FCM;
FIG. 6 is a flowchart describing network management processing;
FIG. 7 is a flowchart describing dubbing processing;
FIG. 8 is another flowchart describing dubbing processing;
FIG. 9 is a diagram illustrating a first monitor display screen;
FIG. 10 is a diagram illustrating a second monitor display screen;
FIG. 11 is a diagram illustrating a third monitor display screen;
FIG. 12 is a diagram illustrating a fourth monitor display screen;
FIG. 13 is a diagram illustrating a fifth monitor display screen;
FIG. 14 is a diagram illustrating a sixth monitor display screen;
FIG. 15 is a flowchart describing the recovery processing to be executed at recovery of power outage;
FIG. 16 is a diagram illustrating a seventh monitor display screen;
FIG. 17 is a flowchart describing bus reset recovery processing;
FIG. 18 is another flowchart describing bus reset recovery processing;
FIG. 19 is a diagram illustrating an eighth monitor display screen; and
FIG. 20 is a diagram illustrating a ninth monitor display screen.

### DETAILED DESCRIPTION OF PREFERRED EMBODIMENTS

This invention will be described in further detail by way of example with reference to the accompanying drawings.

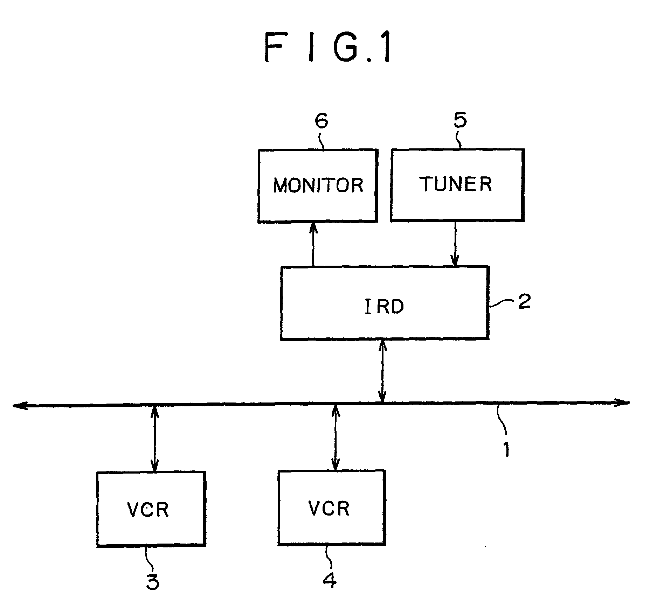

Now, referring to FIG. 1, there is shown a block diagram illustrating a configuration of a network system to which plural information processing apparatuses are connected as in a home network for example.

An IEEE 1394 serial bus 1 is connected to an IRD 2, a VCR 3, and a VCR 4. The IRD 2 is also connected to a tuner 5 and a monitor 6. The VCR 3 and the VCR 4, when connected to the IEEE 1394 serial bus 1, each sends its DCM (Apparatus Control Module) and FCM (Function Control Module) to the IRD 2 through the IEEE 1394 serial bus 1 (details of DCM and FCM will be described later). From these pieces of information, the IRD 2 detects the connection states of the apparatuses connected to the IEEE 1394 serial bus 1, displaying a GUI (Graphical User Interface) for controlling these apparatuses onto the monitor 6.

Looking at the display on the monitor 6, the user operates a keyboard, a mouse, or a remote commander, not shown, connected to the IRD 2, selects desired one of the VCR 3 and the VCR 4 connected to the IEEE 1394 serial bus 1, and specifies the processing to be executed by the selected apparatus. On the basis of the operation done by the user, the IRD 2 generates a control signal and supplies it to the VCR 3 and the VCR 4 over the IEEE 1394 serial bus 1. In accordance with the received control signal, the VCR 3 and the VCR 4 reproduce audio data or video data, transmit/receive data over the IEEE 1394 serial bus 1, or record received data, for example.

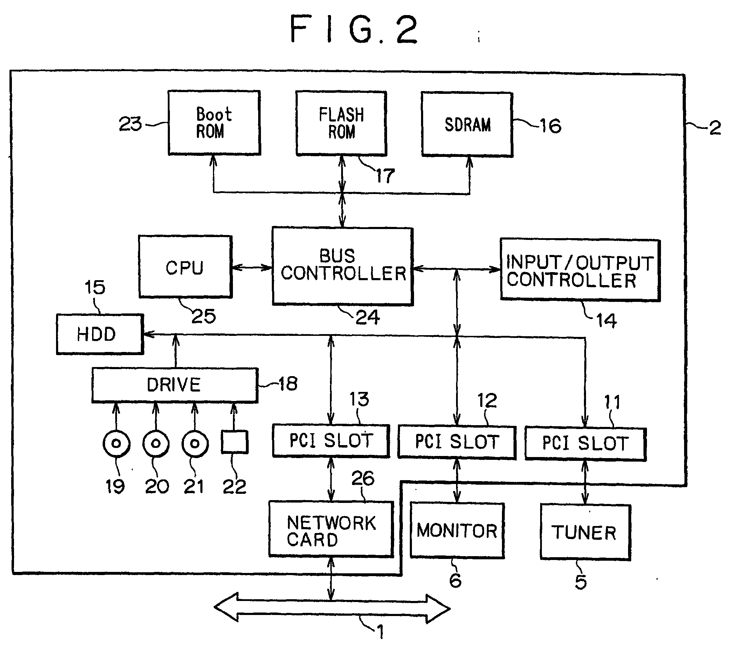

FIG. 2 shows a block diagram illustrating a detailed configuration of the IRD 2. PCI (Peripheral Component Interconnect) slots 11 through 13 accommodate a network card 26 (an IEEE 1394 serial bus interface) for connecting the IEEE 1394 serial bus 1 and expansion cards (a graphics card and so on) for connecting the monitor 6, the tuner 5, and a decoder, not shown. In this example, the tuner 5 is connected in the PCI slot 11, the monitor 6 is connected in the PCI slot 12, and the IEEE 1394 serial bus 1 is connected in the PCI slot 13 through the network card 26 via expansion cards corresponding to the tuner 5, monitor 6, and network card 26, respectively.

An input/output controller 14 has a PS2 slot for connecting a mouse or a keyboard, a modem for connecting a telephone line, a receiver for receiving signals, for example infrared signals, from a remote commander (each not shown).

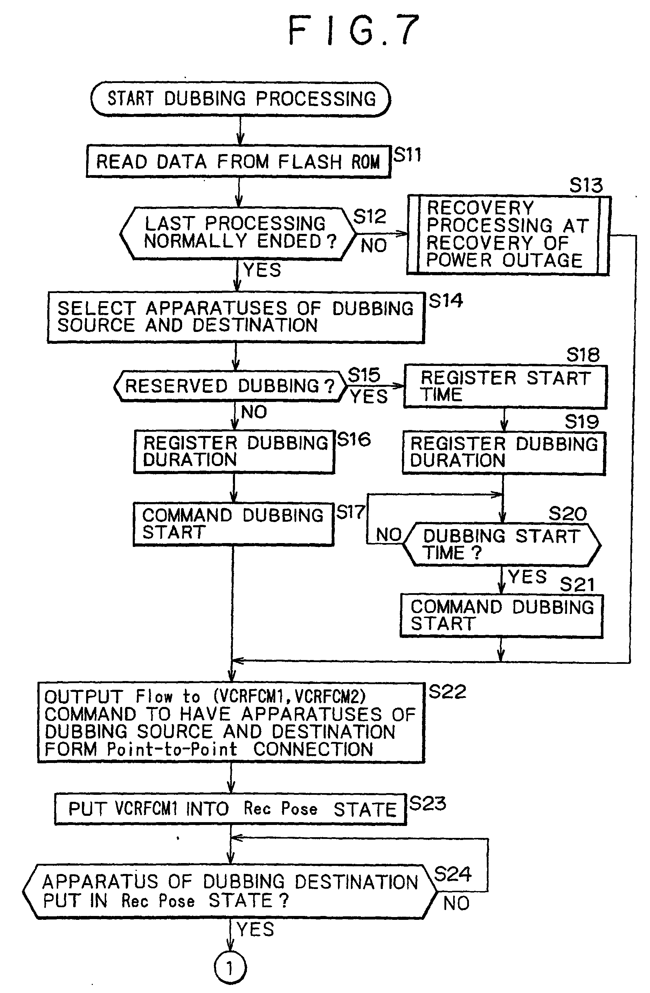

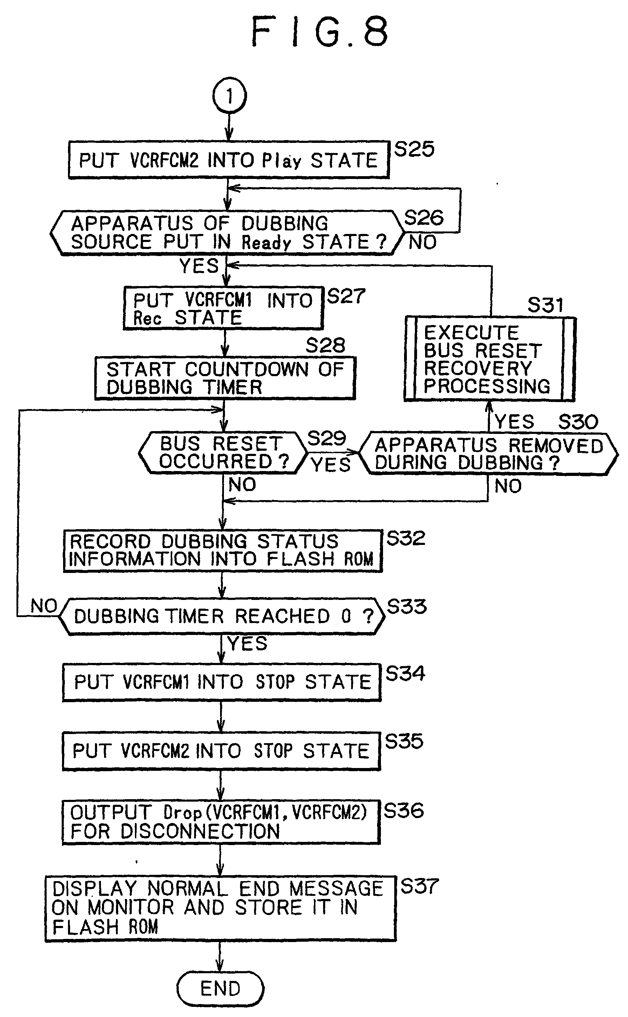

A hard disc drive (HDD) 15 stores various application programs and middleware to be executed by a CPU (Central Processing Unit) 25. An SDRAM (Synchronous Dynamic Random Access Memory) 16 temporarily holds data which are generated along the execution of programs. A flash ROM (Read Only Memory) 17 is written with most recent information associated with the processing executed by an apparatus connected to the IEEE 1394 serial bus 1, by means of the processing to be described later with reference to FIGS. 7 and 8. A drive 18 may accommodate a magnetic disc 19, an optical disc 20, a magneto-optical disc 21, or a semiconductor memory 22. A boot ROM 23 stores a program (a boot code) for booting (activating) an OS (Operating System) loaded from the hard disk drive 15, the magnetic disc 19, the optical disc 20, the magneto-optical disc 21 or the semiconductor memory 22, accommodated in the drive 18, or a network connected, via a telephone line, not shown, to the input/output controller 14.

The PCI slot 11 through the boot ROM 23 are connected to the CPU 25 via a bus controller 24. The CPU 25 receives a signal indicating the user's operation inputted from the input/output controller 14 through the bus controller 24, reads a necessary program from the hard disk drive 15 and executes the program. The CPU 25 generates character image data indicative of messages that assist the user in operating the system for example and displays these messages on the monitor 6 through the bus controller 24 and the PCI slot 12. The CPU 25 also generates control signals for controlling the VCR 3 and the VCR 4 and outputs these signals thereto through the bus controller 24, the PCI slot 13, the network card 26, and the IEEE serial bus 1.

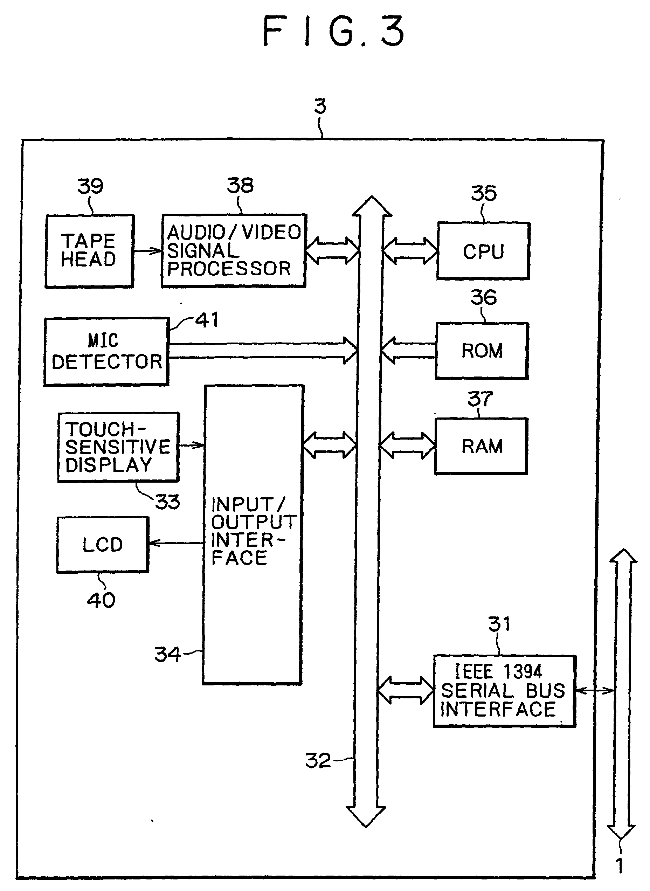

FIG. 3 shows a block diagram illustrating an internal configuration of the VCR 3. A signal transmitted from the IRD 2 is inputted to a CPU 35 through the IEEE 1394 serial bus 1, an IEEE 1394 serial bus interface 31, and an internal bus 32. When the user operates the VCR 3 by use of a touch-sensitive display 33, a signal corresponding to the user operation is inputted to the CPU 35 through an input/output interface 34 and the internal bus 32.

In accordance with the inputted signal, the CPU 35 reads a program from a ROM 36 and executes the program, outputting a control signal to an audio/video signal processor 38 for example through the internal bus 32 and transmitting the DCM and FCM of its own stored in the ROM 36 to the IRD 2 through the internal bus 32, the IEEE 1394 serial bus interface 31 and the IEEE 1394 serial bus 1. A RAM 37 temporarily holds data generated by the program executed by the CPU 35 and data necessary for the VCR 3 to execute processing.

In accordance with the control signal inputted from the CPU 35, the audio/video signal processor 38 reads data from a loaded video cassette tape, not shown, by use of a tape head 39 and transmits the data to another apparatus connected to the network via the internal bus 32, the input/output interface 34, the IEEE 1394 serial bus interface 31, and the IEEE 1394 serial bus 1. In addition, the audio/video signal processor 38 outputs the data read by use of the tape head 39 to an LCD (Liquid Crystal Display) 40 via the internal bus 32 and the input/output interface 34 to display the data. Further, the audio/video signal processor 38 records data supplied from another apparatus (for example, the VCR 4) connected to the network via the IEEE 1394 serial bus 1, the IEEE 1394 serial bus interface 31, and the internal bus 32 to a video cassette tape, not shown, by use the tape head 39.

An MIC (Memory In Cassette) detector 41 detects information recorded in an MIC constituted by a semiconductor memory for example, which is installed on a video cassette tape loaded in the VCR 3. The MIC stores information indicative of the type of the video cassette type on which it is installed. The CPU 35 reads the information stored in the MIC via the internal bus 32 to detect the change of video cassette tapes. Further, the information stored in the MIC is inputted to the IRD 2 shown in FIG. 1 via the internal bus 32, the IEEE 1394 serial bus interface 31, and the IEEE 1394 serial bus 1. Consequently, the IRD 2 can check the video cassette tape loaded in the VCR 3.

It should be noted that the VCR 4 has generally the same configuration as that of the VCR 3 shown in FIG. 3 and therefore the description thereof is skipped.

For the apparatuses on the network as shown in FIG. 1 to operate in a cooperative manner, middleware (software located between lower software such as OS, network control program, or database system and upper application to provide various services to the application) is required. Further, for the network to normally operate to ensure the interactions between the connected apparatuses of different manufactures, common specifications on which the middleware is based are indispensable. Herein, a network system to which HAVi (trademark pending) (Home Audio/Video Interoperability Architecture) is applied as the middleware for the control and management of the network will be described.

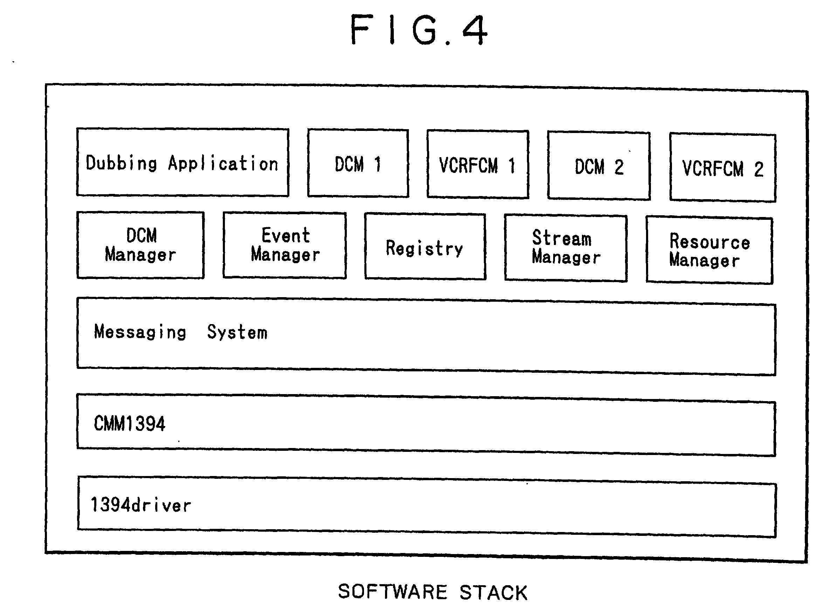

FIG. 4 shows an example of a software stack stored in the hard disc drive shown in FIG. 2. In the figure, upper modules are assumed to belong to higher layers and lower modules to lower layers. The modules except for a 1394 driver are the software modules based on HAVi.

The 1394 driver is a module in which a portion depending on the IEEE 1394 serial bus 1 is described, and the 1394 driver is also a software which provides a common procedure for apparatus access to upper software.

A CMM (Communication Media Manager) 1394 serves as interface between the IEEE 1394 serial bus 1 and each HAVi software module and a dubbing application. The CMM 1394 provides a mechanism for signal transmitting/receiving between the apparatuses connected to the IEEE 1394 serial bus 1 and obtains the operating state of the IEEE 1394 serial bus 1, providing the obtained information to other software modules.

A messaging system serves as API (Application Programming Interface) which is used for ensuring the communication between the software modules of apparatuses on the network, transmitting messages between the software modules. Consequently, in HAVi-based networks, the message transmitting side and the message receiving side can transmit messages without being aware of each other's locations on the network.

A DCM (Device Control Module) manager installs a DCM and an FCM (Function Component Module) on each apparatus on the network. In a HAVi-based network, when a new apparatus is connected to the network, the DCM manager installs the DCM and FCM corresponding to the newly connected apparatus; when an apparatus is disconnected from the network, the DCM manager uninstalls its DCM and FCM.

The DCM controls an apparatus on which is it installed. An application program does not directly control each apparatus connected to the network; it controls each apparatus by means of the DCM. The FCM indicates the contents (functions) of control that an application program executes on each apparatus, transmitting an AV/C command to the apparatus specified by the DCM. Because DCM and FCM function as API, each application program need not be aware of the difference between individual apparatuses. Therefore, in a HAVi-based network, apparatuses on the network can recognize the functions of other apparatuses, making it practical to remotely control other apparatuses.

An event manger generates an event when a new apparatus is connected to the network or a connected apparatus is disconnected for example, changing the network state. The event manager sends the generated event to other software modules. Consequently, each HAVi-based network can realize plug-and-play convenience.

A registry holds and updates information associated with apparatuses; namely the types and functions for example of apparatuses connected to the network, thereby ensuring the interactions between different types of apparatuses. Each application program gets necessary information from this registry. Each apparatus on the network references this registry to make confirmation of whereabouts of the basic software modules of other apparatuses.

A stream manager monitors and manages the flow of stream data (continuous data) such as audio and video on the network to permit the real-time transmission of these data. In addition, the stream manager manages the connections inside and between apparatuses, thereby allocating and deallocating network resources and providing the connection information about the entire network. Further, the stream manager can support the reconnection after the resetting of the network.

A resource manager processes the conflict in apparatus usage right, manages scheduled events such as processing reserved for connected apparatuses, and monitors the network for the disconnection of apparatuses after their registration.

A dubbing application executes the processing for dubbing data stored in apparatuses connected to the network onto other apparatuses.

DCM1 and DCM2, installed from the VCR 3 and the VCR 4 respectively, are the DCMs for the corresponding apparatuses. VCRFCM1 and VCRFCM2, installed from the VCR 3 and the VCR 4 respectively, are FCMs for the corresponding apparatuses.

The above-mentioned software modules are owned by the apparatuses connected to the network in accordance with the apparatus classes specified by HAVi. HAVi specifies four apparatus classes.

A FAV (Full AV Device) is assumed to be an apparatus having a capability of managing the network and has above-mentioned HAVi-based software modules (DCM and FCM may not be owned, which however may be installed from a BAV to be described below). The FAV is capable of executing the applications based on Java (trademark) employed as byte codes and DCM and FCM. Therefore, the FAV can put other apparatuses under its control by uploading the DCM and FCM from these other apparatuses.

An IAV (Intermediate AV Device) is assumed to be an apparatus having a capability of managing the network like the FAV. Unlike the FAV, however, the IAV cannot upload the DCM and FCM from other apparatuses because of the environment in which the Java-based applications employed as byte codes or DCM and FCM cannot be executed. Instead, the IAV can execute the DCM and FCM embedded in IAV apparatuses.

A BAV (Base AV Device) is assumed to be a controlled apparatus capable of being directly connected to a HAVi-based network and owns the DCM and FCM of its own. A LAV (Legacy AV Device) owns only capabilities as an apparatus that can be connected to the IEEE 1394 serial bus 1. In addition to being capable of operating on a standalone basis, the LAV can operate as a controlled apparatus to become compatible with AV/C commands.

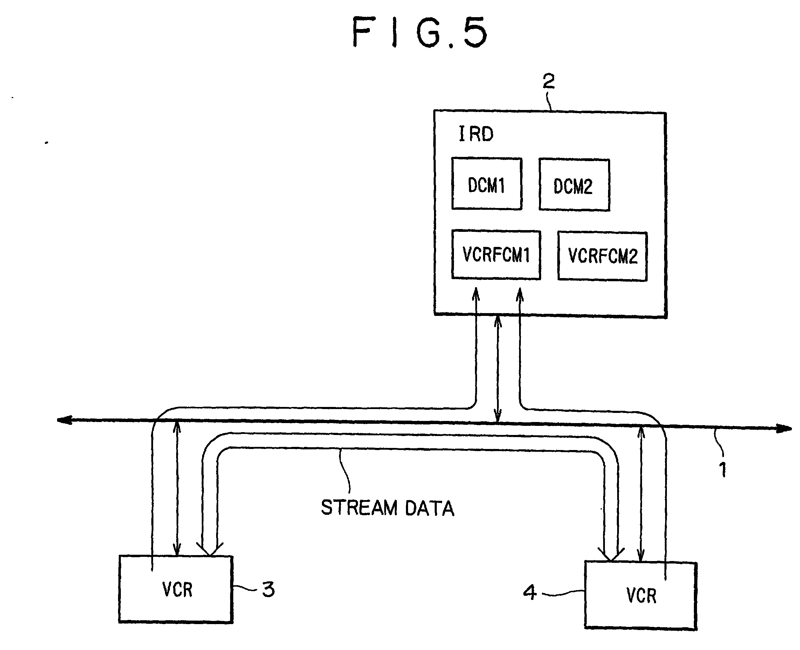

The following describes the IRD 2 as an apparatus corresponding to the FAV and the VCR 3 and the VCR 4 as an apparatus corresponding to the BAV. As shown in FIG. 5, the IRD 2, which is the FAV, installs the DCMs and FCMs of the VCR 3 and the VCR 4, which are the BAV, thereby putting the VCR 3 and the VCR 4 under its control. This enables the IRD 2, which is an apparatus for managing the HAVi-based network, generates a connection with the VCR 3 and the VCR 4, which are the controlled apparatus, by means of the stream manager for example, thereby flowing stream data.

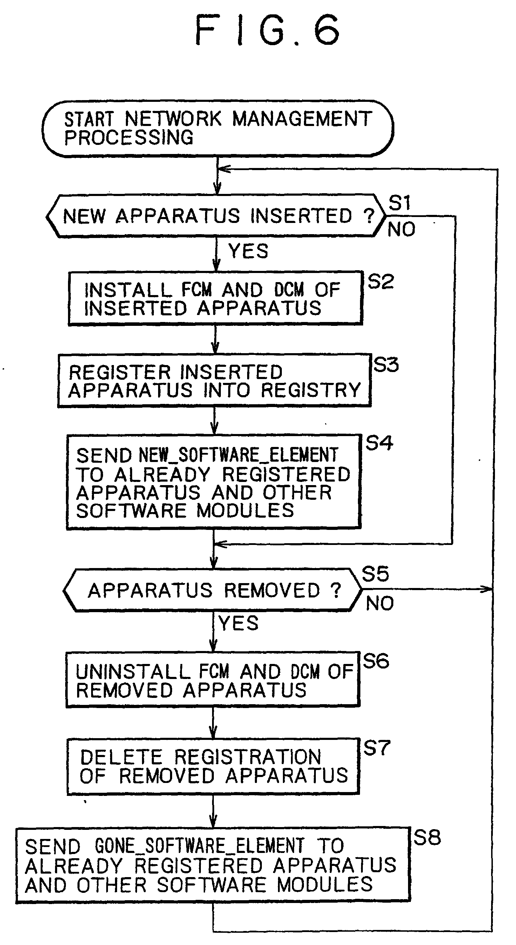

The following describes the network management processing to be executed by the IRD 2 with reference to the flowchart shown in FIG. 6. Each software module of the software stack described above with reference to FIG. 4 is read from the hard disc drive 15 by the CPU 25 for execution, which will not be described any further.

In step S1, the CMM 1394 determines whether a new apparatus has been connected to the network. If the decision is no, the processing goes to step S5.

If the decision is yes in step S1, then the DCM manager installs, in step S2, the DCM and the FCM from the newly connected apparatus. In step S3, the registry registers information associated with the newly connected apparatus.

In step S4, the event manager transmits event NEW_SOFTWARE_ELEMENT to the other apparatuses connected to the network and registered in the registry beforehand and each software module described with reference to FIG. 4. The event NEW_SOFTWARE_ELEMENT includes an ID called SEID (Software Element ID) corresponding to the connected apparatus. By receiving this event NEW_SOFTWARE_ELEMENT, the other apparatuses connected to the network and each software module described with reference to FIG. 4 can recognize that the new apparatus has been connected to the network.

In step S5, the CMM 1394 determines whether an apparatus has been disconnected from the network. If no apparatus is found disconnected in step S5, then the processing goes back to step S1 to repeat the above-mentioned processings.

If an apparatus is found disconnected in step S5, then the DCM manager uninstalls, in step S6, the DCM and the FCM of the disconnected apparatus from the software stack. In step S7, the registry deletes the information associated with the disconnected apparatus.

In step S8, the event manager transmits event GONE_SOFTWARE_ELEMENT to the other apparatuses connected to the network and registered in the registry beforehand and each software module described with reference to FIG. 4. The event GONE_SOFTWARE ELEMENT also includes SEID. By receiving this event GONE_SOFTWARE_ELEMENT, the other apparatuses connected to the network and each software module described with reference to FIG. 4 can recognize which apparatus has been disconnected from the network. Then, the processing goes back to step S1 to repeat the above-mentioned processings.

The following describes dubbing processing with reference to the flowcharts of FIGS. 7 and 8.

In step S11, the dubbing application, when it is activated, reads the information associated with dubbing processing from a predetermined area in the flash ROM 17 through the bus controller 24. In step S12, the dubbing application determines whether the information read in step S11 indicates the end of dubbing processing (including the end by user cancellation) or the progress of dubbing, thereby determining whether the last processing has been normally ended. Namely, if the dubbing processing is found ended normally or canceled by the user, the data indicative of this end status is stored in the flash ROM 17; if the entire system stopped due to power outage for example, the information indicative of the progress of dubbing is stored in the flash ROM 17. Since the dubbing application which is activated before the power outage is restarted after the recovery from the power outage, the application can determine whether the last processing has been normally ended on the basis of the information indicative of the progress of dubbing. Moreover, for example, in the processing of step S32 described later, if the dubbing remaining time of the dubbing source and dubbing destination apparatuses, which is recorded in the flash ROM 17 as the information associated with the currently executed dubbing state is not zero, the dubbing application determines the last processing is not normally ended.

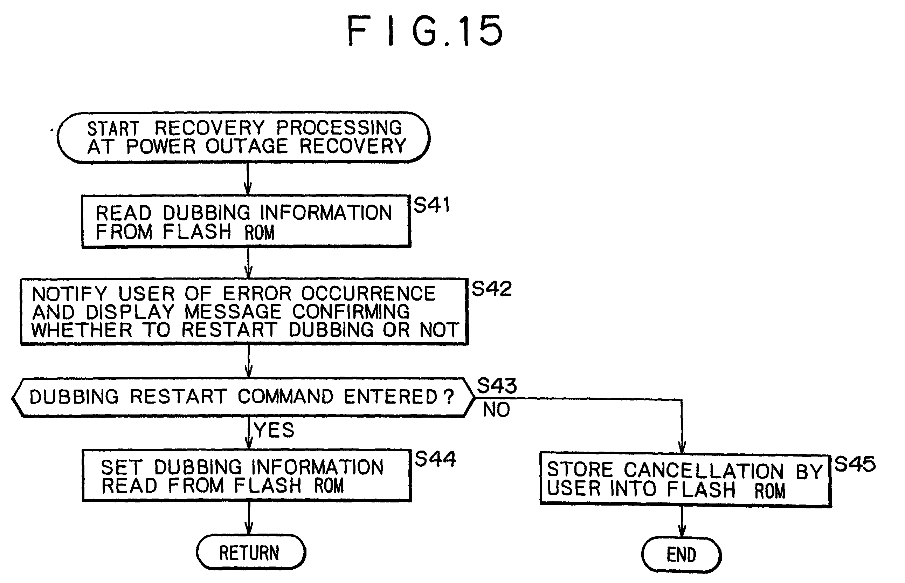

If, in step S12, the last processing is found not normally ended, then the dubbing application executes, in step S13, the recovery processing to be executed at the time of power outage recovery, which will be described with reference to FIG. 15. When the recovery processing is completed, the processing goes to step S22.

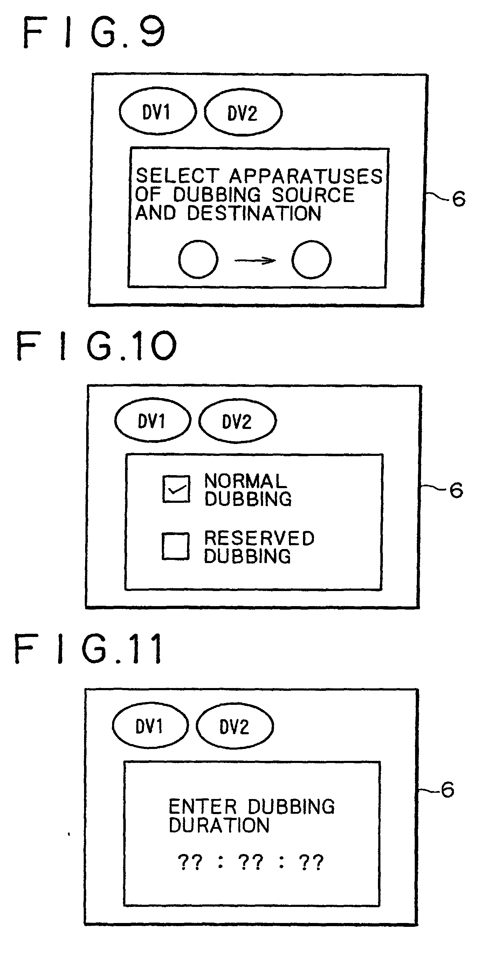

If, in step S12, the last processing is found normally ended, then the dubbing application generates, in step S14, a signal corresponding to the icons indicative of the apparatuses currently connected to the network and a signal for displaying a message for making the user select the apparatuses associated with the dubbing processing, "Select dubbing source and destination apparatuses" for example. The dubbing application outputs these signals to the monitor 6 via the bus controller 24 and the PCI slot 12 to display a screen as shown in FIG. 9 (this operation is executed also when the dubbing application displays characters and images on the monitor 6, which will not be described any further).

Following the display shown on the monitor 6, the user operates a keyboard, a mouse, or a remote commander, not shown, to select the dubbing source and destination apparatuses. A signal indicative of the operation done by the user is inputted to the CPU 25 via the input/output controller 14 and the bus controller 24 (the other signals indicative of user operations are also inputted to the CPU 15, which will not be described any further). The dubbing application recognizes the FCMs corresponding to the selected apparatuses, respectively. Here, it is assumed that the user selects the VCR 3 for dubbing destination and the VCR 4 for dubbing source, and therefore, the dubbing application recognizes VCRFCM1 and VCRFCM2.

In step S15, the dubbing application displays on the monitor 6 two buttons indicative of reserved dubbing processing and normal dubbing processing as shown in FIG. 10 for example. The dubbing application determines whether reserved dubbing processing is to be executed or not depending on which button the user presses, operating a keyboard, mouse, or remote commander, not shown.

If, in step S15, the dubbing application determines that reserved dubbing processing is not to be executed (namely, normal dubbing processing is to be executed), then the dubbing application displays, in step S16, on the monitor 6 a message for prompting the user to enter a dubbing time as shown in FIG. 11 for example. When the user enters a dubbing time in response to the message shown on the monitor 6, the dubbing application registers the inputted dubbing time into a dubbing timer inside the dubbing application.

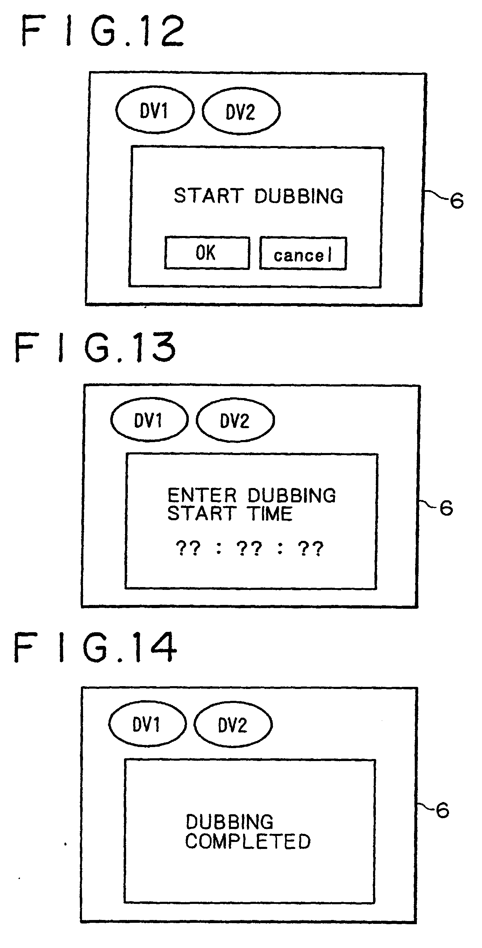

In step S17, the dubbing application displays a button on the monitor 6 as shown in FIG. 12 for example, the button being for allowing the user to issue a command for starting dubbing. The user presses this button by operating the keyboard, mouse, or remote commander, not shown, to issue the command for starting dubbing. A signal indicative of the user command is inputted to the CPU 25, thereby advancing the processing to step S22.

In step S15, if reserved dubbing processing is found to be executed, then the dubbing application displays, in step S18, on the monitor 6 a message for prompting the user to enter a dubbing start time as shown in FIG. 13. Following this message, the user enters a dubbing start time. A signal indicative of the entered dubbing start time is inputted to the CPU 25. The dubbing application registers the entered dubbing start time in a reservation timer inside the dubbing application and, at the same time, notifies the resource manager for managing schedule of the command of reserved dubbing processing.

In step S19, the dubbing application displays on the monitor 6 a message for prompting the user to enter a dubbing time. When the user enters a dubbing time by following the message on the monitor 6, the dubbing application registers the entered dubbing time in a dubbing timer inside the dubbing application.

In step S20, the resource manager determines whether the current time matches the dubbing start time entered in step S18. If the decision is no in step S20, the processing of step S20 is repeated until the current time matches the dubbing start time.

If the decision is yes in step S20, then the resource manager issues, in step S21, a command to start dubbing to the dubbing application.

In step S22, the dubbing application outputs Flow to(VCRFCM1, VCRFCM2) command to the stream manager to establish a Point-to-Point connection between the VCR 3 and the VCR 4. This allows the stream to flow from the VCR 3 to the VCR 4.

In step S23, the dubbing application puts the VCRFCM1 in a Rec Pause state. The VCRFCM1 outputs a Rec Pause AV/C command to the VCR 3 via the bus controller 24, the PCI slot 13, the network card 26, and the IEEE 1394 serial bus 1. Receiving this command, the VCR 3 starts such processing necessary for starting recording as rewinding a tape to a predetermined position.

In step S24, the dubbing application determines whether the VCR 3, which is the dubbing destination apparatus, is in the Rec Pause state (namely, whether such processing necessary for starting recording as rewinding a tape to a predetermined position has been completed). When the VCR 3 enters the Rec Pause state, information thereof is sent from the VCR 3 to the dubbing application via the VCRFCM1. In step S24, if the decision is no, the processing of step S24 is repeated until the VCR 3 enters the Rec Pause state.

When the VCR 3 has entered the Rec Pause state, the dubbing application puts the VCRFCM2 into a Play state in step S25. The VCRFCM2 sends a Play AV/C command to the VCR 4 via the bus controller 24, the PCI slot 13, the network card 26, and the IEEE 1394 serial bus 1. Receiving this command, the VCR 4 starts such processing necessary for starting recording as rewinding a tape to a predetermined position.

In step S26, the dubbing application determines whether the VCR 4, which is the dubbing source apparatus, is in a Ready state (ready for starting reproduction). When the VCR 4 has entered the Ready state, information thereof is sent from the VCR 4 to the dubbing application via the VCRFCM2. If the decision is no in step S26, the processing of step S26 is repeated until the VCR 4 enters the Ready state. When the VCR 4 has entered the Ready state, the VCR 4 sends information thereof to the VCRFCM2 and starts reproduction.

If the VCR 4 is found in the Ready state in step S26, then the dubbing application puts the VCRFCM1 into a Rec state in step S27 and sends a Rec AV/C command to the VCR 3 via the bus controller 24, the PCI slot 13, the network card 26, and the IEEE 1394 serial bus 1. Receiving this command, the VCR 3 starts recording the stream data coming from the VCR 4.

In step S28, the dubbing application starts counting-down the dubbing timer inside the dubbing application.

In step S29, the dubbing application monitors whether the event manager has generated event GONE_SOFTWARE_ELEMENT (if the event manager receives, from the resource manager, information telling the disconnection of an apparatus from the network, the event manager generates the event GONE_SOFTWARE_ELEMENT), thereby determining whether a bus reset has occurred or not.

If a bus reset is found in step S29, then the dubbing application references, in step S30, SEID included in the event GONE_SOFTWARE_ELEMENT received in step S29 to determine whether the apparatus disconnected from the network is one on which the dubbing processing was being executed. If the disconnected is found, in step S30, not one on which the dubbing processing was being executed, the processing goes to step S32.

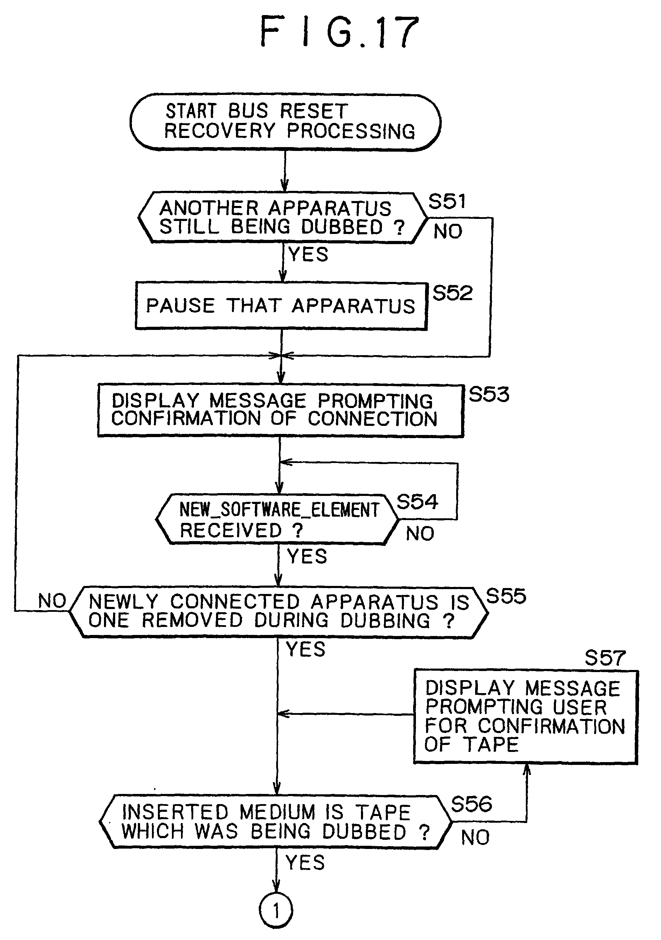

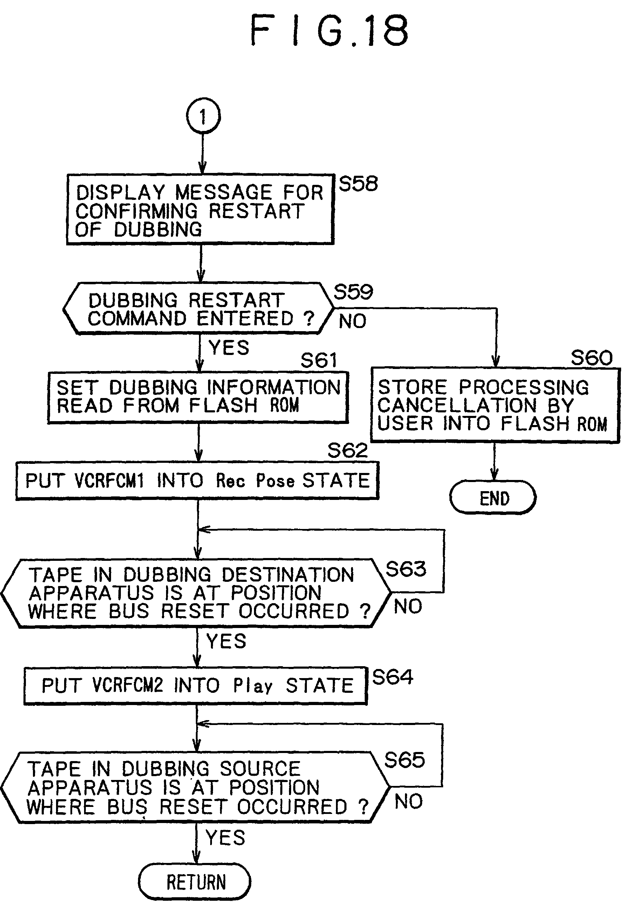

If the disconnected apparatus is found, in step S30, one on which the dubbing processing was being executed, then bus reset recovery processing is executed in step S31, which will be described with reference to FIGS. 17 and 18. When the bus reset recovery processing has been completed, the processing returns to step S27 to repeat the above-mentioned processings.

If no bus reset is found in step S29, then the dubbing application records in the flash ROM 17, in step S32, information associated with the currently executed dubbing processing (for example, HUID (HAVi Unique ID), which is the ID of each of the dubbing source and dubbing destination apparatuses, the ID not changing for every bus reset, a tape position, a remaining time, Pause state or not, and so on).

In step S33, the dubbing application determines whether the value of the dubbing timer is 0 or not. If the value of the dubbing timer is found not 0 in step S33, the processing returns to step S29 to repeat the above-mentioned processings.

If the value of the dubbing timer is found 0 in step S33, then the dubbing application puts the VCRFCM1 into a Stop state in step S34, upon which the VCRFCM1 outputs a Stop AV/C command to the VCR 3 via the bus controller 24, the PCI slot 13, the network card 26, and the IEEE 1394 serial bus 1. Receiving this command, the VCR 3 stops the recording of the stream data inputted. Then, in step S35, the dubbing application puts the VCRFCM2 into a Stop state, upon which the VCRFCM2 outputs a Stop AV/C command to the VCR 4 via the bus controller 24, the PCI slot 13, the network card 26, and the IEEE 1394 serial bus 1. Receiving this command, the VCR 4 stops the reproduction of the data recorded on the loaded video cassette tape.

In step S36, the dubbing application outputs a Drop(VCRFCM1, VCRFCM2) command to the stream manager to clear the Point-to-Point connection between the FCRFCM1 and the FCRFCM2. In step S37, the dubbing application displays a message indicative of the normal end of the dubbing processing on the monitor 6 as shown in FIG. 14 for example and stores this information in the flash ROM 17, upon which the dubbing processing comes to an end.

The following describes, with reference to the flowchart of FIG. 15, the recovery processing to be executed at the recovery of power outage in step S13 shown in FIG. 7.

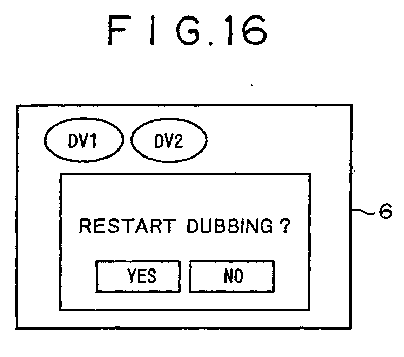

In step S41, the dubbing application reads the information associated with the dubbing state recorded in the flash ROM 17 in step S32 shown in FIG. 8. In step S42, the dubbing application notifies the user of the occurrence of an error and displays a message on the monitor 6 as shown in FIG. 16, the message being for prompting the user to enter information whether to restart the dubbing processing or not.

In step S43, the dubbing application determines, on the basis of a signal caused by a user operation and inputted to the CPU 25, whether a dubbing restart command has been entered.

If the dubbing restart command is found not entered in step S43 then the dubbing application stores, in step S45, a signal indicative of the cancellation of the dubbing processing by the user into the flash ROM 17, upon which the processing comes to an end (in this case, the processing does not go to step S22 shown in FIG. 7).

If the dubbing restart command is found entered in step S43, then the dubbing application sets, in step S44, a value of the dubbing timer for example on the basis of the dubbing information read in step S41. Then, the processing goes to step S22 shown in FIG. 7, so that the dubbing processing is restarted from the state immediately before the occurrence of power outage stored in the flash ROM 17.

In the above-mentioned example, the message for confirming the restart of the dubbing processing is displayed on the monitor 6 in step S42 and the decision is made in step S43 whether the dubbing restart command has been entered, restarting the dubbing processing if the dubbing restart command has been entered. Alternatively, the information associated with the dubbing state stored in the flash ROM 17 may be reset when the power outage has been restored, thereby restarting the dubbing processing automatically.

The following describes the bus reset recovery processing in step S31 shown in FIG. 8 with reference to the flowcharts of FIGS. 17 and 18.

In step S51, the dubbing application references the registry to determine whether there remains any apparatus on which the dubbing processing is being executed, except the disconnected apparatus. If no apparatus is found remaining in step S51, the processing goes to step S53.

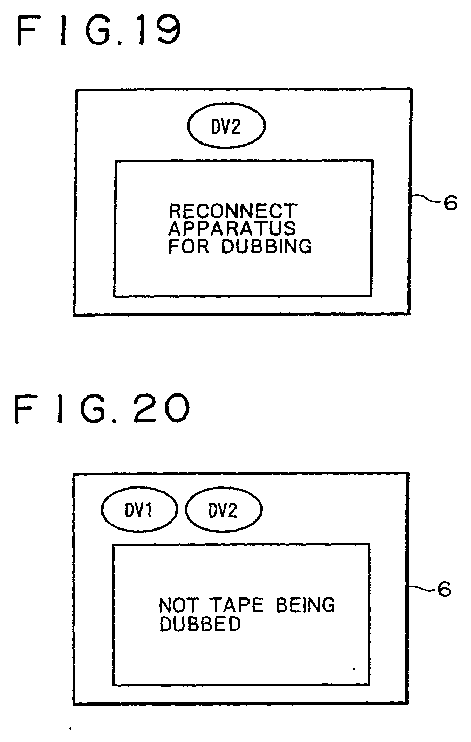

If an apparatus on which the dubbing processing is being executed is found remaining in step S51, the dubbing application temporarily stops that apparatus in step S52. In step S53, the dubbing application displays a message on the monitor 6 as shown in FIG. 19 for example, the message prompting the user to check the connection state of the apparatus connected to the IEEE 1394 serial bus 1.

In step S54, the dubbing application determines whether the event NEW_SOFTWARE_ELEMENT generated by the event manager has been received or not. If the event NEW_SOFTWARE_ELEMENT is found not received in step S54, the processing of step S54 is repeated until the event is received.

If the event NEW_SOFTWARE_ELEMENT is found received in step S54, then the dubbing application references the HUID from the registry in step S55 on the basis of the SEID included in the event NEW_SOFTWARE_ELEMENT, thereby determining whether the apparatus newly connected to the network is the apparatus disconnected during the dubbing processing. If, in step S55, the newly connected apparatus is found not the apparatus disconnected during the dubbing processing, the processing returns to step S53 to repeat the above-mentioned processings.

If, in step S55, the newly connected apparatus to the network is found the apparatus disconnected during the dubbing processing, then the dubbing application uses in step S56 a messaging system to read information from the MIC installed on the video cassette tape loaded in the newly connected apparatus, thereby determining whether the loaded video cassette tape is the video cassette tape on which the dubbing processing was being executed.

If the loaded video cassette tape is found not the one on which the dubbing processing was being executed, then the dubbing application displays a message on the monitor 6 as shown in FIG. 20 for example in step S57 for making the user check the video cassette tape. Then, the processing returns to step S56.

If, in step S56, the loaded video cassette tape is found the one on which the dubbing processing was being executed, then the dubbing application displays, in step S58, a message on the monitor 6 as shown in FIG. 16 for making the user to confirm if the dubbing processing is to be restarted or not.

In step S59, the dubbing application determines, on the basis of a signal inputted to the CPU 25, whether a dubbing restart command has been entered by the user. If, in step S59, the dubbing restart command is found not entered, the dubbing application stores into the flash ROM 17 a signal indicative of the cancellation of the dubbing processing by the user, upon which the processing comes to an end, in step S60 (the processing does not go to step S27).

If, in step S59, the dubbing restart command is found entered, then the dubbing application reads, in step S61, the information associated with the dubbing state stored in step S32 shown in FIG. 8 in the flash ROM 17 and sets a dubbing timer value for example on the basis of this information.

In step S62, the dubbing application puts the VCRFCM1 into a Rec Pause state. The VCRFCM1 outputs a Rec Pause AV/C command to the VCR 3 via the bus controller 24, the PCI slot 13, the network card 26, and the IEEE 1394 serial bus. Receiving this command, the VCR 3 rewinds the tape to the position as it was before the bus reset recorded in the flash ROM 17.

In step S63, the dubbing application determines whether the position of the tape loaded in the VCR 3, which is the dubbing destination apparatus, has reached the position at it was before the bus reset stored in the flash ROM 17. If, in step S63, the position is found not reaching the positions as it was before the bus reset, the processing of step S63 is repeated until the tape position reaches the position as it was before the bus reset.

If, in step S63, the tape position is found reaching the position at it was before the bus reset, then the dubbing application puts the VCRFCM2 into a Play state in step S64. The VCRFCM2 outputs a Play AV/C command to the VCR 4 via the bus controller 24, the PCI slot 13, the network card 26, and the IEEE 1394 serial bus 1. Receiving this command, the VCR 4 rewinds the tape to the position as it was before the bus reset stored in the flash ROM 17.

In step S65, the dubbing application determines whether the position of the tape loaded in the VCR 4, which is the dubbing source apparatus, has reached the position as it was before the bus reset stored in the flash ROM 17. If, in step S65, the tape position is found not reaching the position as it was before the bus reset, the processing of step S65 is repeated until the tape position reaches the position as it was before the bus reset.

If, in step S65, the tape position is found reaching the position at it was before the bus reset, the processing goes to step S27 shown in FIG. 8. Therefore, the dubbing processing restarts from the position as it was before the bus reset stored in the flash ROM 17.

The software for executing the above-mentioned sequence of processings is installed from a recording medium into a computer in which the programs constituting this software are installed in a dedicated hardware apparatus or a general-purpose personal computer capable of executing various functions by installing various programs.

Such a recording medium is constituted by not only the hard disc drive 15 on which the programs are recorded and which is delivered to the user as previously installed in the IRD 2, but also a package medium formed by the magnetic disc 19 (including a floppy disc), the optical disc 20 (including a CD-ROM (Compact Disc Read Only Memory) and a DVD (Digital Versatile Disc), the magneto-optical disc 21 (including an MD (Mini Disc), or the semiconductor memory 22 on which these programs are recorded, which are delivered to users for the provision thereof.

Herein, the steps describing each program recorded on the recording medium include not only processes which are executed in a time-series manner along a described order but also processes which are not always executed in a time-series manner but in parallel or individually.

It should be noted that the system herein denotes the entire apparatus composed of plural apparatuses. As described and according to the invention, the information processing apparatus, the information processing method, and the program recorded on the recording medium store the information associated with control of other apparatuses connected to a network. Consequently, the novel constitution can quickly and easily control the recovery processing to be executed after the interruption of processing for example.

While the preferred embodiments of the present invention have been described using specific terms, such description is for illustrative purposes only, and it is to be understood that changes and variations may be made without departing from the spirit or scope of the appended claims.

## Claims

1. An information processing apparatus for transmitting/receiving a desired information signal through a network, comprising:
control means for controlling another information processing apparatus through said network; and
storage means for storing information associated with control of another information processing apparatus by said control means.

2. The information processing apparatus according to claim 1, further comprising: abnormal condition detecting means for detecting an abnormal condition caused during the execution of predetermined processing by another information processing apparatus under the control by said control means.

3. The information processing apparatus according to claim 2, further comprising: recovery detecting means for detecting the elimination of said abnormal condition detected by said abnormal condition detecting means.

4. The information processing apparatus according to claim 2, further comprising: state resetting means for setting a state as it was before the occurrence of said abnormal condition on the basis of said information associated with control of another information processing apparatus stored in said storage means.

5. The information processing apparatus according to claim 4, wherein said control means restarts control of another information processing apparatus if the control state before the occurrence of said abnormal state is set by said state resetting means.

6. The information processing apparatus according to claim 2, further comprising: output means for outputting contents of said abnormal condition detected by said abnormal condition detecting means.

7. The information processing apparatus according to claim 2, wherein said abnormal condition detecting means determines presence of said abnormal condition by detecting a value of remaining time.

8. The information processing apparatus according to claim 1, wherein said control means comprising: time setting means for setting a time from which the control is started.

9. The information processing apparatus according to claim 1, wherein said control means comprising: an apparatus control module and a functional component module.

10. The information processing apparatus according to claim 1, wherein said storage means stores a value of remaining time into a nonvolatile storage area.

11. An information processing method for processing an information processing apparatus for transmitting/receiving a desired information signal through a network, said method comprising the steps of:
controlling another information processing apparatus through said network; and
storing information associated with control of another information processing apparatus in said control step.

12. A recording medium recording a computer-readable program for use in an information processing apparatus for transmitting/receiving a desired information signal through a network, said computer-readable program comprising the steps of:
controlling another information processing apparatus through said network; and
storing information associated with control of another information processing apparatus in said control step.
